(19) Europäisches Patentamt
European Patent Office
Office européen des brevets

(11) Publication number: **0 598 134 A1**

(12) **EUROPEAN PATENT APPLICATION published in accordance with Art. 158(3) EPC**

(21) Application number: **93910418.8**

(51) Int. Cl.5: **C08F 10/00**, C08F 4/642

(22) Date of filing: **28.05.93**

(86) International application number: **PCT/JP93/00727**

(87) International publication number: **WO 93/24541 (09.12.93 93/29)**

(30) Priority: **28.05.92 JP 160035/92**

(43) Date of publication of application: **25.05.94 Bulletin 94/21**

(84) Designated Contracting States: **BE DE ES FR GB IT NL SE**

(71) Applicant: **IDEMITSU KOSAN COMPANY LIMITED**
**1-1, Marunouchi 3-chome**
**Chiyoda-ku**
**Tokyo 100(JP)**

(72) Inventor: **NAKACHO, Kenji Idemitsu Petrochemical Company Ltd.**
**1-1, Anesakikaigan**
**Ichihara-shi**
**Chiba 299-01 1(JP)**
Inventor: **FUNABASHI, Hideo Idemitsu Petrochemical Comp.Ltd.**
**1-1, Anesakikaigan**
**Ichihara-shi**
**Chiba 299-01-01-01(JP)**

(74) Representative: **Baverstock, Michael George Douglas et al**
**BOULT, WADE & TENNANT**
**27 Furnival Street**
**London, EC4A 1PO (GB)**

(54) **PROCESS FOR PRODUCING POLYOLEFIN.**

(57) A process for producing a polyolefin by polymerizing an olefin in the presence of a catalyst, wherein the catalyst comprises a catalytic system composed of (A) a titanium compound, (B) a compound capable of forming an ionic complex by the reaction with a transition metal compound, (C) an organoaluminum compound, and optionally (D) a nonpolymerizable compound having $\pi$-electrons. This process makes it possible to prepare a highly active catalytic system without the necessity for using a large amount of an organometallic compound and to produce a polyolefin, particulary a linear low-density polyoethylene efficiently.

EP 0 598 134 A1

## Technical Field

The present invention relates to an improvement in a method for the preparation of a polyolefin. To say more particularly, the present invention relates to a method for the preparation of a polyolefin or, in particular, a linear low-density polyethylene with good efficiency by using a highly active catalyst without using a large amount of an organometallic compound.

## Background Art

In recent years, a proposal has been made for a catalyst consisting of a metallocene compound of a transition metal and an aluminoxane as a novel homogeneous catalyst (official publication of Japanese Patent Kokai No. 58-19309 and elsewhere). Though having extremely high activity and excellent copolymerizability, this catalyst has a defect that an aluminoxane is required in a large amount.

On the other hand, a method for the polymerization of $\alpha$ -olefin, in which a specific ammonium-containing boron complex and a metallocene compound are used as the catalyst, is known (official publication of Japanese Patent Kohyo No. 1-502036). This method, however, is not suitable to be industrially practiced because of the remarkably low polymerization activity of the catalyst used and the low yield of the $\alpha$ -olefin.

Nowadays, a proposal has been made for the use of a catalyst consisting of an ionic metallocene catalyst and an alkyl aluminum or a catalyst consisting of a reaction product of a halogenated metallocene compound and an organo-metallic compound and a stable anion (official publication of Japanese Patent Kokai No. 3-207704 and official publication of International Kokai No. WO 92/01723).

However, each of these methods necessitates the use of an expensive compound containing zirconium or hafnium so that the cost is unavoidably high. Incidentally, although it is said that other inexpensive transition metal compounds can also be used, they can be rendered practical only with difficulties because nothing is disclosed on the actual method and the results thereof.

## Disclosure of Invention

The present invention has been completed with an object to provide a method for the preparation of a linear low-density polyethylene without using expensive zirconium compounds or hafnium compounds and by using a catalyst capable of exhibiting high activity even with a small amount of use of organometallic compounds.

The inventors have continued extensive investigations on a catalyst for the preparation of a linear low-density polyethylene and, as a result thereof, have previously proposed to use a catalyst system of which the principal ingredients include a transition metal compound, a compound capable of forming an ionic complex by reacting with a transition metal compound and an organoaluminum compound (Japanese Patent Application No. 3-339523). Subsequently, studies were further continued in order to develop a catalyst of high activity leading to a discovery that very high activity is exhibited to the polymerization reaction of an olefin by a catalyst system consisting of a titanium compound, a compound capable of forming an ionic complex by reacting with a titanium compound, an organoaluminum compound and, optionally, a non-polymerizable compound having a $\pi$ electron or a catalyst system consisting of a reaction product obtained by bringing them into contact leading to completion of the present invention on the base of this discovery.

That is, the present invention provides a method for the preparation of a polyolefin characterized in that, in the preparation of a polyolefin by the polymerization of an olefin in the presence of a catalyst, the catalyst to be used is a catalyst system consisting of (A) a titanium compound, (B) a compound capable of forming an ionic complex by reacting with a transition metal compound, (C) an organoaluminum compound and, optionally, (D) a non-polymerizable compound having a $\pi$ electron or a catalyst system consisting of the reaction product obtained by subjecting these respective ingredients to a contacting reaction in advance.

## Best Mode for Carrying Out the Invention

The method of the present invention is a method for the preparation of a polyolefin by the polymerization of an olefin in the presence of a specific catalyst system or, namely, a catalyst system of which the constituting ingredients include (A) a titanium compound, (B) a compound capable of forming an ionic complex by reacting with a transition metal compound, (C) an organoaluminum compound and, optionally, (D) a non-polymerizable compound having a $\pi$ electron.

Satisfactory titanium compounds usable as the above mentioned ingredient (A) include, for example, those compounds represented by the general formula

$CpTiR^1{}_aR^2{}_bR^3{}_c$, (I)

$Cp_2TiR^1{}_aR^2{}_b$, (II)

$(Cp\text{-}A\text{-}Cp)TiR^1{}_aR^2{}_b$, (III)

or

$TiR^1{}_aR^2{}_bR^3{}_cR^4{}_d$, (IV)

and addition products of these compounds with a Lewis base or an unsaturated hydrocarbon.

The Cp in the above given general formulas (I) to (III) denotes a cyclic unsaturated hydrocarbon group such as cyclopentadienyl group, substituted cyclopentadienyl groups, indenyl group, substituted indenyl groups, tetrahydroindenyl group, substituted tetrahydroindenyl groups, fluorenyl group, substituted fluorenyl groups and the like. The substituent groups to these groups include, for example, lower alkyl groups such as methyl group, ethyl group, isopropyl group and the like and silicon-containing groups such as silyl group and the like. Incidentally, the two Cps in the general formulas (II) and (III) can be the same ones or different from each other.

And, the $R^1$, $R^2$, $R^3$ and $R^4$ in the above given general formulas (I) to (IV) are each a $\sigma$ -bonding ligand, chelate-forming ligand or Lewis base. Examples of the $\sigma$ -bonding ligand include a hydrogen atom, oxygen atom, halogen atoms such as fluorine atom, chlorine atom, bromine atom and iodine atom; alkyl groups having 1 to 20 carbon atoms such as methyl group, ethyl group, n-propyl group, isopropyl group, n-butyl group, octyl group, 2-ethylhexyl group and the like; alkoxy groups having 1 to 20 carbon atoms such as methoxy group, ethoxy group, propoxy group, butoxy group, decyloxy group, benzyloxy group, phenoxy group and the like; aryl groups, alkaryl groups and aralkyl groups having 6 to 20 carbon atoms such as phenyl group, tolyl group, xylyl group, ethylphenyl group, benzyl group and the like; acyloxy groups having 1 to 20 carbon atoms such as acetoxy group, butyryloxy group, octyl carbonyloxy group, heptadecyl carbonyloxy group and the like; and silicon-containing groups such as trimethylsilyl group, trimethylsilylmethyl group, triethylsilyl group and the like. Examples of the chelate-forming ligand include acetylacetonato group, substituted acetylacetonato groups and the like. Examples of the Lewis base include ether compounds such as dimethyl ether, diethyl ether, tetrahydrofuran and the like; thioether compounds such as diethyl thioether, tetrahydrothiophene and the like; ester compounds such as ethyl benzoate, propyl benzoate and the like; nitrile compounds such as acetonitrile, benzonitrile and the like; amine compounds such as trimethyl amine, triethyl amine, tributyl amine, N,N-dimethyl aniline, pyridine, 2,2'-bipyridine, phenanthroline and the like; and phosphine compounds such as triethyl phosphine, triphenyl phosphine and the like. These $R^1$, $R^2$, $R^3$ and $R^4$ each can be the same as or can be different from the others. Further, two of them can optionally be connected together either directly or through a heteroatom to form a ring.

The A in the general formula (III) is a crosslink such as, for example, a methylene crosslink, dimethylmethylene crosslink, ethylene crosslink, 1,1-cyclohexylene crosslink, dimethylsilylene crosslink, dimethylgermylene crosslink, dimethylstannylene crosslink and the like.

And, a, b, c and d in the above given general formulas (I) to (IV) are each 0 or an integer of 1 to 4 and are selected in such a way that the sum of the total of them and the number of the Cp has a value to satisfy the atomic valency 4 of titanium.

Accordingly, examples of the compound represented by the above given general formula (I) include (pentamethylcyclopentadienyl) trimethyl titanium, (pentamethylcyclopentadienyl) triphenyl titanium, (pentamethylcyclopentadienyl) tribenzyl titanium, (pentamethylcyclopentadienyl) trichloro titanium, (pentamethylcyclopentadienyl) trimethoxy titanium, (cyclopentadienyl) trimethyl titanium, (cyclopentadienyl) triphenyl titanium, (cyclopentadienyl) tribenzyl titanium, (cyclopentadienyl) trichloro titanium, (cyclopentadienyl) trimethoxy titanium, (cyclopentadienyl) dimethyl methoxy titanium, (methylcyclopentadienyl) trimethyl titanium, (methylcyclopentadienyl) triphenyl titanium, (methylcyclopentadienyl) tribenzyl titanium, (methylcyclopentadienyl) trichloro titanium, (methylcyclopentadienyl) dimethyl methoxy titanium, (dimethylcyclopentadienyl) trichloro titanium, (trimethylcyclopentadienyl) trichloro titanium, (trimethylsilylcyclopentadienyl) trimethyl titanium, (tetramethylcyclopentadienyl) trichloro titanium and the like.

And, examples of the compound represented by the above given general formula (II) include bis(cyclopentadienyl) dimethyl titanium, bis(cyclopentadienyl) diphenyl titanium, bis(cyclopentadienyl) diethyl

titanium, bis (cyclopentadienyl) dibenzyl titanium, bis(cyclopentadienyl) dimethoxy titanium, bis(cyclopentadienyl) dichloro titanium, bis(cyclopentadienyl) titanium dihydride, bis(cyclopentadienyl) monochloro titanium monohydride, bis(methylcyclopentadienyl) dimethyl titanium, bis(methylcyclopentadienyl) dichloro titanium, bis(methylcyclopentadienyl) dibenzyl titanium, bis(pentamethylcyclopentadienyl) dimethyl titanium, bis(pentamethylcyclopentadienyl) dichloro titanium, bis(pentamethylcyclopentadienyl) dibenzyl titanium, bis(pentamethylcyclopentadienyl) chloro methyl titanium, bis(pentamethylcyclopentadienyl) methyl titanium hydride, (cyclopentadienyl) (pentamethylcyclopentadienyl) dichloro titanium and the like.

Further, examples of the compound represented by the above given general formula (III) include ethylene bis(indenyl) dimethyl titanium, ethylene bis(indenyl) dichloro titanium, ethylene bis(tetrahydroindenyl) dimethyl titanium, ethylene bis(tetrahydroindenyl) dichloro titanium, dimethylsilylene bis(cyclopentadienyl) dimethyl titanium, dimethylsilylene bis(cyclopentadienyl) dichloro titanium, isopropylidene (cyclopentadienyl) (9-fluorenyl) dimethyl titanium, isopropylidene (cyclopentadienyl) (9-fluorenyl) dichloro titanium, (phenyl methyl methylene) (9-fluorenyl) (cyclopentadienyl) dimethyl titanium, diphenylmethylene (cyclopentadienyl) (9-fluorenyl) dimethyl titanium, ethylene (9-fluorenyl) (cyclopentadienyl) dimethyl titanium, cyclohexylidene (9-fluorenyl) (cyclopentadienyl) dimethyl titanium, cyclopentylidene (9-fluorenyl) (cyclopentadienyl) dimethyl titanium, cyclobutylidene (9-fluorenyl) (cyclopentadienyl) dimethyl titanium, dimethylsilylene (9-fluorenyl) (cyclopentadienyl) dimethyl titanium, dimethylsilylene bis(2,3,5-trimethyl cyclopentadienyl) dichloro titanium, dimethylsilylene, bis((2,3,5-trimethyl cyclopentadienyl) dimethyl titanium, dimethylsilylene bis(indenyl) dichloro titanium and the like.

On the other hand, examples of the compound represented by the above given general formula (IV) include tetramethyl titanium, tetrabenzyl titanium, tetramethoxy titanium, tetraethoxy titanium, tetrapropoxy titanium, tetrabutoxy titanium, tetraphenoxy titanium, tetrachloro titanium, tetrabromo titanium, butoxy trichloro titanium, dibutoxy dichloro titanium, bis(2,6-di-tert-butyl phenoxy) dimethyl titanium, bis(2,6-di-tert-butyl phenoxy) dichloro titanium, bis(acetylacetonato) titanium, bis(acetylacetonato) dichloro titanium, bis(acetylacetonato) dipropoxy titanium, 2,2'-thiobis (4-methyl-6-tert-butyl phenoxy) diisopropoxy titanium, 2,2'-thiobis(4-methyl-6-tert-butyl phenoxy) dichloro titanium, 2,2'-methylene bis(4-methyl-6-tert-butyl phenoxy) diisopropoxy titanium, 2,2'-methylene bis(4-methyl-6-tert-butyl phenoxy) dichloro titanium, tetrakis(diethylamino) titanium, tetrakis(dioctylamino) titanium and the like.

In the method of the present invention, an isotactic polyolefin of high isotacticity with a high molecular weight and high melting point can be obtained by using, as the titanium compound of the ingredient (A), a titanium compound, among the above given general formula (III), of which the ligand is a multiple coordination compound having two substituted or unsubstituted conjugated cyclopentadienyl groups (of which at least one is a substituted cyclopentadienyl group) bonded together through an element selected from the 14th Group of the Periodic Table according to CNIC.

Such a compound is exemplified, for example, by the compounds represented by the general formula

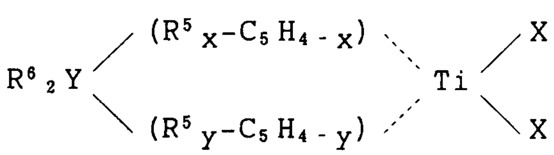

... (V)

and derivatives thereof.

The Y in the above given general formula (V) denotes an atom of carbon, silicon, germanium or tin and $R^5{}_x$-$C_5H_{4-x}$, $R^5{}_y$-$C_5H_{4-y}$ each denote a substituted cyclopentadienyl group and x and y each denote an integer of 1 to 4. In the above, $R^5$ denotes a hydrogen atom, silyl group or hydrocarbon group, each of which can be the same as or different from the other. And, in at least one of the cyclopentadienyl groups, at least one carbon atom of the carbon atoms bonded to the Y has $R^5$. $R^6$ denotes a hydrogen atom, alkyl group having 1 to 20 carbon atoms or aryl group, alkaryl group or aralkyl group having 6 to 20 carbon atoms. X denotes a hydrogen atom, halogen atom, alkyl group having 1 to 20 carbon atoms, aryl group, alkaryl group or aralkyl group having 6 to 20 carbon atoms or alkoxy group having 1 to 20 carbon atoms. X can be each the same as or different from the other and $R^6$ can be each the same as or different from the other.

The substituted cyclopentadienyl group in the above given general formula (V) is exemplified, for example, by methyl cyclopentadienyl group, ethyl cyclopentadienyl group, isopropyl cyclopentadienyl group, 1,2-dimethyl cyclopentadienyl group, 1,3-dimethyl cyclopentadienyl group, 1,2,3-trimethyl cyclopentadienyl group, 1,2,4-trimethyl cyclopentadienyl group and the like. Particular examples of X include F, Cl,

Br and I as the halogen atom; methyl group, ethyl group, n-propyl group, isopropyl group, n-butyl group, octyl group and 2-ethylhexyl group as the alkyl group having 1 to 20 carbon atoms; methoxy group, ethoxy group, propoxy group, butoxy group and phenoxy group as the alkoxy group having 1 to 20 carbon atoms; phenyl group, tolyl group, xylyl group and benzyl group as the aryl group, alkaryl group or aralkyl group having 6 to 20 carbon atoms; and so on. Particular examples of $R^6$ include methyl group, ethyl group, phenyl group, tolyl group, xylyl group, benzyl group and the like.

Such a compound of the general formula (V) is exemplified, for example, by dimethylsilylene bis(2,3,5-trimethyl cyclopentadienyl) dichloro titanium.

As the ingredient (A) of the catalyst system used in the method of the present invention, besides, the addition product of the above described titanium compound with a Lewis base or an unsaturated hydrocarbon can be used. The Lewis base here is exemplified by ether compounds such as dimethyl ether, diethyl ether, tetrahydrofuran and the like, thioether compounds such as tetrahydrothiophene and the like, ester compounds such as ethyl benzoate and the like, nitrile compounds such as acetonitrile, benzonitrile and the like, amine compounds such as trimethyl amine, triethyl amine, tributyl amine, N,N-dimethyl aniline, pyridine, 2,2'-bipyridine, phenanthroline and the like and phosphine compounds such as triethyl phosphine, triphenyl phosphine and the like and the unsaturated hydrocarbon is exemplified by ethylene, butadiene, 1-pentene, isoprene, pentadiene, hexene, benzene, toluene, xylene, cycloheptatriene, cyclooctadiene, cyclooctatriene and cyclooctatetraene as well as derivatives thereof and the like.

In the next place, a compound capable of forming an ionic complex by reacting with a transition metal compound is used as the ingredient (B) in the catalyst system in the method of the present invention. This compound can be any of those capable of forming an ionic complex by reacting with the titanium compound as the above mentioned ingredient (A) but those compounds consisting of a cation and an anion having a plural number of groups bonded to an element or, in particular, those coordination complex compounds consisting of a cation and an anion having a plural number of groups bonded to an element are satisfactory. As such a compound consisting of a cation and an anion having a plural number of groups bonded to an element, those compounds represented by the general formula

$$([L^1\text{-}R^7]^{K+})_p([M^3Z^1Z^2 \cdots Z^n]^{(n-m)-})_q \qquad (IV)$$

or

$$([L^2]^{K+})_p([M^4Z^1Z^2 \cdots Z^n]^{(n-m)-})_q \qquad (VII)$$

($L^2$ in the formula is $M^5$, $R^8R^9M^6$, $R^{10}{}_3C$ or $R^{11}M^6$) can be used satisfactorily.

The $L^1$ in the above given general formulas (VI) and (VII) denotes a Lewis base, $M^3$ and $M^4$ each denote an element selected from the 1st, 2nd, 5th, 6th, 7th, 8th, 9th, 10th, 13th, 14th and 15th Groups of the Periodic Table or, preferably, an element selected from the 13th, 14th and 15th Groups, $M^5$ and $M^6$ each denote an element selected from the 1st, 2nd, 3rd, 4th, 5th, 6th, 7th, 8th, 9th, 10th, 11th, 12th and 17th Groups of the Periodic Table, $Z^1$ to $Z^n$ each denote a hydrogen atom, dialkylamino group, alkoxy group of 1 to 20 carbon atoms, aryloxy group of 6 to 20 carbon atoms, alkyl group of 1 to 20 carbon atoms, aryl group, alkaryl group or aralkyl group of 6 to 20 carbon atoms, halogen-substituted hydrocarbon group of 1 to 20 carbon atoms, acyloxy group of 1 to 20 carbon atoms, organometalloid group or halogen atom while it is optional that two or more of $Z^1$ to $Z^n$ are connected together to form a ring. $R^7$ denotes a hydrogen atom, alkyl group of 1 to 20 carbon atoms or aryl group, alkaryl group or aralkyl group of 6 to 20 carbon atoms, $R^8$ and $R^9$ each denote a cyclopentadienyl group, substituted cyclopentadienyl group, indenyl group or fluorenyl group and $R^{10}$ denotes an alkyl group of 1 to 20 carbon atoms, aryl group, alkaryl group or aralkyl group. $R^{11}$ denotes a macrocyclic ligand such as tetraphenyl porphyrin, phthalocyanine and the like. m is the atomic valency of $M^3$ and $M^4$ which is an integer of 1 to 7, n is an integer of 2 to 8, k is the number of ionic valency of $[L^1\text{-}R^7]$ and $[L^2]$ which is an integer of 1 to 7, p is a positive integer and $q = (p \times k)/(n - m)$.

Particular examples of the above mentioned Lewis base include amine compounds such as ammonia, methyl amine, aniline, dimethyl amine, diethyl amine, N-methyl aniline, diphenyl amine, trimethyl amine, triethyl amine, tri-n-butyl amine, N,N-dimethyl aniline, methyl diphenyl amine, pyridine, p-bromo-N,N-dimethyl aniline, p-nitro-N,N-dimethyl aniline and the like, phosphine compounds such as triethyl phosphine, triphenyl phosphine, diphenyl phosphine and the like, ether compounds such as dimethyl ether, diethyl ether, tetrahydrofuran, dioxane and the like, thioether compounds such as diethyl thioether, tetrahydrothiophene and the like, ester compounds such as ethyl benzoate and the like, and so on. Particular examples of $M^3$ and $M^4$ include B, Al, Si, P, As, Sb and the like or, preferably, B and P, particular

examples of $M^5$ include Li, Na, Ag, Cu, Br, I and the like and particular examples of $M^6$ include Mn, Fe, Co, Ni, Zn and the like.

Particular examples of $Z^1$ to $Z^n$ include: dimethyl amino group and diethyl amino group as the dialkyl amino group; methoxy group, ethoxy group and n-butoxy group as the alkoxy group of 1 to 20 carbon atoms; phenoxy group, 2,6-dimethyl phenoxy group and naphthyloxy group as the aryloxy group of 6 to 20 carbon atoms; methyl group, ethyl group, n-propyl group, isopropyl group, n-butyl group, n-octyl group and 2-ethylhexyl group as the alkyl group of 1 to 20 carbon atoms; phenyl group, p-tolyl group, benzyl group, 4-tert-butyl phenyl group, 2,6-dimethyl phenyl group, 3,5-dimethyl phenyl group, 2,4-dimethyl phenyl group and 2,3-dimethyl phenyl group as the aryl group, alkaryl group or aralkyl group of 6 to 20 carbon atoms; p-fluoro phenyl group, 3,5-difluoro phenyl group, pentachloro phenyl group, 3,4,5-trifluoro phenyl group, pentafluoro phenyl group and 3,5-di(trifluoromethyl) phenyl group as the halogen-substituted hydrocarbon group of 1 to 20 carbon atoms; F, Cl, Br and I as the halogen atom; and pentamethyl antimony group, trimethyl silyl group, trimethyl germyl group, diphenyl arsine group, dicyclohexyl antimony group and diphenyl boron group as the organometalloid group. Particular examples of $R^7$ and $R^{10}$ include similar ones to those previously given as the examples of alkyl groups of 1 to 20 carbon atoms and aryl groups, alkaryl groups or aralkyl groups of 6 to 20 carbon atoms. Particular examples of the substituted cyclopentadienyl group as $R^8$ and $R^9$ include those substituted by alkyl groups such as methyl cyclopentadienyl group, butyl cyclopentadienyl group, pentamethyl cyclopentadienyl group and the like. Here, the alkyl group usually has 1 to 6 carbon atoms and the number of the substituting alkyl groups is 1 to 5.

Among the compounds of the above given general formulas (VI) and (VII), those having boron as the $M^3$ and $M^4$ are preferred. Preferable ones of the compound represented by the said general formula (VI) include, for example, triethyl ammonium tetraphenyl borate, tri(n-butyl) ammonium tetraphenyl borate, trimethyl ammonium tetraphenyl borate, tetraethyl ammonium tetraphenyl borate, tri(n-butyl) ammonium tetraphenyl borate, benzyl tri(n-butyl) ammonium tetraphenyl borate, dimethyl diphenyl ammonium tetraphenyl borate, methyl triphenyl ammonium tetraphenyl borate, trimethyl anilinium tetraphenyl borate, methyl pyridinium tetraphenyl borate, benzyl pyridinium tetraphenyl borate, methyl 2-cyanopyridinium tetraphenyl borate, trimethyl sulfonium tetraphenyl borate, benzyl dimethyl sulfonium tetraphenyl borate, triethyl ammonium tetra(pentafluorophenyl) borate, tri(n-butyl) ammonium tetra(pentafluorophenyl) borate, triphenyl ammonium tetra(pentafluorophenyl) borate, tetrabutyl ammonium tetra(pentafluorophenyl) borate, tetraethyl ammonium tetra(pentafluorophenyl) borate, methyl tri(n-butyl) ammonium tetra(pentafluorophenyl) borate, benzyl tri(n-butyl) ammonium tetra(pentafluorophenyl) borate, methyl diphenyl ammonium tetra-(pentafluorophenyl) borate, methyl triphenyl ammonium tetra(pentafluorophenyl) borate, dimethyl diphenyl ammonium tetra(pentafluorophenyl) borate, anilinium tetra(pentafluorophenyl) borate, methyl anilinium tetra-(pentafluorophenyl) borate, dimethyl anilinium tetra(pentafluorophenyl) borate, trimethyl anilinium tetra-(pentafluorophenyl) borate, dimethyl m-nitroanilinium tetra(pentafluorophenyl) borate, dimethyl p-bromoanilinium tetra(pentafluorophenyl) borate, pyridinium tetra(pentafluorophenyl) borate, p-cyanopyridinium tetra(pentafluorophenyl) borate, N-methyl pyridinium tetra(pentafluorophenyl) borate, N-benzyl pyridinium tetra(pentafluorophenyl) borate, o-cyano-N-methyl pyridinium tetra(pentafluorophenyl) borate, p-cyano-N-methyl pyridinium tetra(pentafluorophenyl) borate, p-cyano-N-benzyl pyridinium tetra-(pentafluorophenyl) borate, trimethyl sulfonium tetra(pentafluorophenyl) borate, benzyl dimethyl sulfonium tetra(pentafluorophenyl) borate, tetraphenyl phosphonium tetra(pentafluorophenyl) borate, triphenyl phosphonium tetra(pentafluorophenyl) borate, dimethyl anilinium tetra[3,5-di(trifluoromethyl) phenyl) borate, triethyl ammonium hexafluoroarsenate and the like.

And, preferable ones as the compound represented by the above given general formula (VII) include, for example, ferrocenium tetraphenyl borate, silver tetraphenyl borate, trityl tetraphenyl borate, (tetraphenyl porphyrin manganese) tetraphenyl borate, ferrocenium tetra(pentafluorophenyl) borate, 1,1'-dimethyl ferrocenium tetra(pentafluorophenyl) borate, decamethyl ferrocenium tetra(pentafluorophenyl) borate, acetyl ferrocenium tetra(pentafluorophenyl) borate, formyl ferrocenium tetra(pentafluorophenyl) borate, cyano ferrocenium tetra(pentafluorophenyl) borate, silver tetra(pentafluorophenyl) borate, trityl tetra-(pentafluorophenyl) borate, lithium tetra(pentafluorophenyl) borate, sodium tetra(pentafluorophenyl) borate, (tetraphenyl porphyrine manganese) tetra(pentafluorophenyl) borate, (tetraphenyl porphyrin iron chloride) tetra(pentafluorophenyl) borate, (tetraphenyl porphyrin zinc) tetra(pentafluorophenyl) borate, silver tetrafluoro borate, silver hexafluoro arsenate, silver hexafluoro antimonate and the like.

Further, compounds other than the above given general formulas (VI) and (VII) can also be used including, for example, tri(pentafluorophenyl) boron, tri[3,5-di(trifluoromethyl)phenyl] boron, triphenyl boron and the like.

In the next place, the organoaluminum compound to be used as the ingredient (C) of the catalyst system in the method of the present invention can be exemplified by the compounds represented by the

general formula

$R^{12}{}_rAlQ_{3-r}$ (VIII)

($R^{12}$ in the formula denotes a hydrocarbon group such as alkyl groups, alkenyl groups, aryl groups, aralkyl groups and the like having 1 to 20 or, preferably, 1 to 12 carbon atoms, Q denotes a hydrogen atom, alkoxy group of 1 to 20 carbon atoms or halogen atom and r is an integer of 1 to 3), the chain-like aluminoxanes represented by the general formula

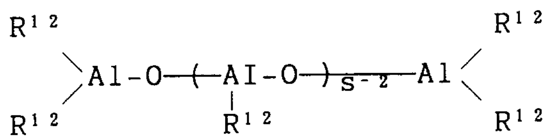 ··· (IX)

($R^{12}$ in the formula has the same meaning as given above and s denotes the degree of polymerization which is an integer of, usually, 3 to 50 or, preferably, 7 to 40), and the cyclic alkyl aluminoxanes represented by the general formula

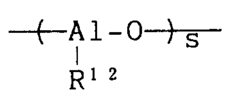 ··· (X)

($R^{12}$ and s in the formula each have the same meaning as given above).

Particular examples of the compound represented by the above given general formula (III) include trimethyl aluminum, triethyl aluminum, triisopropyl aluminum, triisobutyl aluminum, dimethyl aluminum chloride, diethyl aluminum chloride, methyl aluminum dichloride, ethyl aluminum dichloride, dimethyl aluminum fluoride, diisobutyl aluminum hydride, diethyl aluminum hydride, ethyl aluminum sesquichloride and the like.

Preferable ones among the compounds of the above given general formulas (VIII), (IX) and (X) are the alkyl group-containing aluminum compounds having at least one alkyl group having at least three carbon atoms or, in particular, branched alkyl group and aluminoxanes. Particularly preferable are triisobutyl aluminum and aluminoxanes having a degree of polymerization of at least 7. High catalytic activity can be obtained by using this triisobutyl aluminum, an aluminoxane having a degree of polymerization of at least 7 or a mixture thereof.

As the method for the preparation of the above mentioned aluminoxane, a method in which an alkyl aluminum and a condensation agent such as water and the like is named and the means therefor is not particularly limitative so that the reaction can be undertaken according to a known method. For example, there are (1) a method in which an organoaluminum compound is dissolved in an organic solvent and the same is brought into contact with water, (2) a method in which an organoaluminum compound is added first in the course of the polymerization followed by the addition of water, (3) a method in which an organoaluminum compound is reacted with the water of crystallization contained in a metal salt and the like or water of adsorption to an inorganic material or organic material, (4) a method in which a tetraalkyl dialuminoxane is reacted with a trialkyl aluminum followed by further reaction with water, and so on.

And, the non-polymerizable compound having a $\pi$ electron as the ingredient (D), which is used in some cases as an ingredient of the catalyst system, includes aromatic hydrocarbon compounds, aliphatic unsaturated hydrocarbon compounds and alicyclic unsaturated hydrocarbon compounds. The aromatic hydrocarbon compound is exemplified, for example, by benzene, alkyl benzenes such as toluene, ethyl benzene, n-propyl benzene, n-octyl benzene, xylene, 1,3,5-trimethyl benzene, 1,2,3-trimethyl benzene and the like, halogen-containing aromatic hydrocarbon compounds such as chlorobenzene, bromobenzene and the like, nitrogen-containing aromatic hydrocarbon compounds such as nitrobenzene, aniline and the like, aromatic ether compounds such as benzyl methyl ether, 1,3-dimethoxy benzene, anisole, o-methoxy toluene, m-methoxy toluene and the like, aromatic ester compounds such as methyl benzoate, ethyl benzoate, tert-butyl benzoate and the like and polynuclear aromatic compounds such as naphthalene, Tetralin, anthracene, phenanthrene and the like as well as typical metal compounds containing an aromatic

hydrocarbon such as phenyl silane, phenyl trimethyl silane and the like.

And, the aliphatic unsaturated hydrocarbon compound is exemplified, for example, by internal olefins such as 2-butene, 2-hexene, 3-hexene, 2-methyl-2-heptene, 2-methyl-3-heptene, 2-octene, 3-octene and the like, internal dienes such as 2,4-hexadiene, 2,6-octadiene, 3,5-octadiene and the like and internal dialkynes such as 2,4-hexadiyne, 2,6-octadiyne, 3,5-octadiyne and the like as well as typical metal compounds containing an aliphatic unsaturated hydrocarbon group such as 2-octenyl trimethyl silane and the like, and so on.

On the other hand, the alicyclic unsaturated hydrocarbon compound is exemplified, for example, by cyclopentene, cyclopentadiene, dicyclopentadiene, cyclohexene, 1,3-cyclohexadiene, 1,4-cyclohexadiene, norbornene and norbornadiene as well as typical metal compounds containing an alicyclic unsaturated hydrocarbon group such as cyclopentadienyl trimethyl silane, 2-(4-cyclohexenylethyl) methyl dichlorosilane, 1-cyclohexenyloxy trimethyl silane and the like, and so on.

Further, the compounds having at least two aromatic rings in a molecule represented by the general formula

$$Ar^1\text{-}(Y'R^{13}_{n'-2})_k\text{-}Ar^2 \qquad (XI)$$

(In the formula, $Ar^1$ and $Ar^2$ each denote an aryl group, where they can each be the same as or can each be different from the other. Y' denotes an atom of the 2nd, 13th, 14th, 15th or 16th Group of the Periodic Table, $R^{13}$ denotes a hydrogen atom, halogen atom, alkyl group of 1 to 20 carbon atoms, alkoxy group of 1 to 20 carbon atoms, aryl group of 6 to 20 carbon atoms, aryloxy group of 6 to 20 carbon atoms, silyl group or alkyl silyl group of 1 to 20 carbon atoms and n' is the atomic valency of Y'. And, k is an integer of 0 to 10 and, when k is 2 or larger, Y' can each be the same as or different from the other, $R^{13}$ can each be the same as or different from the others when in plural number and two of $R^{13}$, being each an alkyl group, can optionally be in a cyclic form by being connected together) can be used satisfactorily.

In the general formula (XI), the aryl group denoted by $Ar^1$ and $Ar^2$ is exemplified, in particular, by phenyl group, tolyl group, xylyl group, octylphenyl group, fluorophenyl group, nitrophenyl group, biphenyl group, naphthyl group and the like.

And, in the general formula (XI), the connecting part represented by "$-(Y'R^{13}_{n'-2})_k-$" connecting the two aryl groups denoted by $Ar^1$ and $Ar^2$ is that in which Y's are connected by an atom of the 2nd, 13th, 14th, 15th or 16th Group of the Periodic Table such as carbon, silicon, germanium, aluminum, boron, nitrogen, phosphorus, oxygen or sulfur.

To say particularly, those in which Y' is a carbon atom such as methylene group, 1,1-ethylene group, 1,2-ethylene group, dimethyl ethylene group, 1,1-cyclohexylene group, phenyl methylene group, diphenyl methylene group and the like are included.

Further, those in which Y' is a silicon atom such as silylene group, methyl silylene group, dimethyl silylene group, diethyl silylene group, tetramethyl disilylene group and the like, those in which Y' is a germanium atom such as dimethyl germylene group, those in which Y' is an aluminum atom such as phenyl aluminum group, those in which Y' is a boron atom such as phenyl boron group, those in which Y' is a nitrogen atom such as phenyl imino group and those in which Y' is a phosphorus atom such as phenyl phosphine group as well as those in which Y' is an oxygen atom or sulfur atom are included.

Further, the formulas

$-Si(CH_3)_2-CH_2-Si(CH_3)_2-$,
$-Si(CH_3)_2-O-Si(CH_3)_2-$,
$-CH_2-Si(CH_3)_2-$,
$-CH_2-O-$

and the like can be named.

In the general formula (XI), incidentally, $R^{13}$ includes a hydrogen atom, atom of a halogen such as chlorine, fluorine, bromine, iodine and the like, alkyl groups of 1 to 20 carbon atoms such as methyl group, ethyl group, propyl group, n-butyl group, isobutyl group, amyl group, isoamyl group, octyl group, 2-ethylhexyl group and the like, alkoxy groups of 1 to 20 carbon atoms such as methoxy group, ethoxy group, propoxy group, butoxy group, hexyloxy group, octyloxy group, 2-ethylhexyloxy group and the like, aryl groups of 6 to 20 carbon atoms such as phenyl group, tolyl group, xylyl group, naphthyl group and the like, aryloxy group of 6 to 20 carbon atoms such as phenoxy group, p-tolyloxy group, p-tert-butyl phenoxy group and the like, silyl group and alkyl silyl groups of 1 to 20 carbon atoms such as trimethyl silyl group, triethyl silyl group and the like.

And, the compound represented by the general formula (XI) is exemplified, for example, by diphenyl dimethyl silane, diphenyl diethyl silane, triphenyl methyl silane; 1,2-diphenyl tetramethyl disilane, dimethyl di(p-toluyl) silane, diphenyl methane, triphenyl methane, dibenzyl, biphenyl, 4-benzyl biphenyl, di(o-toluyl) methane; 2,2-diphenyl propane, triphenyl aluminum, triphenyl borane, tri(pentafluorophenyl) borane, N-methyl diphenyl amine, triphenyl phosphine, diphenyl ether, diphenyl sulfide and the like. They can be used singly or can be used as a combination of two kinds or more.

As the polymerization catalyst, in the method of the present invention, (1) a catalyst consisting of a combination of the above described ingredient (A), ingredient (B) and ingredient (C) or the ingredient (A), ingredient (B), ingredient (C) and ingredient (D) can be used or (2) a reaction product obtained by bringing these ingredients into contact beforehand can be used.

As to the amounts of use of the respective ingredients in the method (1), it is desirable to use the respective ingredients such that the ingredient (A) is in the range from 0.0001 to 5 mmoles/liter or, preferably, from 0.001 to 1 mmole/liter, the ingredient (B) is in the range from 0.0001 to 5 mmoles/liter or, preferably, from 0.001 to 1 mmole/liter, the ingredient (C) is in the range from 0.001 to 500 mmoles/liter or, preferably, from 0.05 to 100 mmoles/liter calculated as Al atoms and the ingredient (D) is at least 0.0001 mmole/liter and the molar ratio of the ingredient (B)/ingredient (A) is in the range from 0.01 to 100 or, preferably, from 0.5 to 10 and the molar ratio of the ingredient (C)/ingredient (A) is in the range from 0.1 to 2000 or, preferably, from 5 to 1000.

In the method (2), on the other hand, the above described ingredient (A), ingredient (B) and ingredient (C) or the ingredient (A), ingredient (B), ingredient (C) and ingredient (D) are brought into contact in an inert solvent under an atmosphere of an inert gas while, in this case, it is desirable to use the respective ingredients in such a way that the ingredient (A) is in the range from 0.01 to 100 mmoles/liter, ingredient (B) is in the range from 0.01 to 100 mmoles/liter, ingredient (C) is in the range from 0.1 to 1000 mmoles/liter calculated as Al atoms and ingredient (D) is in the range from 0.01 to 100 mmoles/liter and, in particular, the contacting product can be imparted with remarkably improved polymerization activity when the conditions shown below are satisfied:

$0.5 < [B]/[Ti] < 5$;
$0.5 < [Al_R]/[Ti] < 500$;

and

$0.1$ mmole/liter $< [Ti]$;
$0.5 < [\pi]/[Ti]$

[in which [Ti] is the molar concentration of the ingredient (A) in contacting, [B] is the molar concentration of the ingredient (B) in contacting, $[Al_R]$ is the molar concentration of the ingredient (C) in contacting (calculated as Al atoms) and $[\pi]$ is the molar concentration of the ingredient (D) in contacting].

When this [B]/[Ti] is 0.5 or smaller, the improving effect on the activity cannot be noted while, when it is 5 or larger, the ingredient (B) is consumed futilely. And, when $[Al_R]/[Ti]$ is 0.5 or smaller, the improving effect on the activity is insufficient while, when it is 500 or larger, the ingredient (C) is consumed futilely and a large amount of the Al constituent remains in the polymer product. When [Ti] is 0.1 mmole/liter or smaller, the velocity of the contacting reaction is low so that the improving effect on the activity can be hardly exhibited. Further, the effect is insufficient when $[\pi]/[Ti]$ is smaller than 0.5.

The inert solvent used in contacting the respective ingredients is exemplified, for example, by aliphatic hydrocarbons of 5 to 18 carbon atoms, alicyclic hydrocarbons, aromatic hydrocarbons and the like and, particularly, exemplified by n-pentane, isopentane, hexane, heptane, octane, nonane, decane, tetradecane, cyclohexane, benzene, toluene, xylene and the like, which can be used singly or can be used as a mixture of two kinds or more.

And, the temperature of contacting and reaction time are not particularly limitative and the sequential order of contacting of the respective ingredients is also not particularly limitative so that the contacting can be performed at any desired order.

And, it is optional, like the so-called preliminary polymerization, that the contacting treatment is conducted in the presence of a small amount of the monomer or under the conditions where the polymerization reaction is remarkably slow.

The contacting treatment product prepared in this manner can be stored under an atmosphere of an inert gas.

In the method of the present invention, a polyolefin is prepared by the polymerization of an olefin in the presence of a polymerization catalyst prepared by the above described method (1) or (2). The kind of the said olefin is not particularly limitative including, for example, α -olefins of 2 to 10 carbon atoms and it is optional that these olefins contain a diene compound such as, for example, butadiene, isoprene, chloroprene, ethylidene norbornene and the like while it is preferable that the method of the present invention is applied to the preparation of, preferably, an ethylene-based polymer or, in particular, a linear low-density polyethylene.

In the preparation of the said ethylene-based polymer, ethylene can be polymerized alone or ethylene and other α -olefin or a diene compound can be copolymerized. The said α -olefin is exemplified, for example, by straightly chain-like or branched monoolefin of 3 to 18 carbon atoms or α -olefins substituted by an aromatic nucleus. Particular examples of such an α -olefin include straightly chain-like monoolefins such as propylene, butene-1, hexene-1, octene-1, nonene-1, decene-1, undecene-1, dodecene-1 and the like and branched monoolefins such as 3-methyl butene-1, 3-methyl pentene-1, 4-methyl pentene-1, 2-ethyl hexene-1, 2,2,4-trimethyl pentene-1 and the like as well as monoolefins substituted by an aromatic nucleus such as styrene and the like.

The diene compounds preferably include straightly chain-like or branched chain-like non-conjugated diolefins of 6 to 20 carbon atoms. In particular, polyenes such as 1,5-hexadiene, 1,6-heptadiene, 1,7-octadiene, 1,8-nonadiene, 1,9-decadiene, 2,5-dimethyl-1,5-hexadiene and 1,4-dimethyl-4-tert-butyl-2,6-heptadiene as well as 1,5,9-decatriene and the like, endomethylene-type cyclic diene compounds such as 5-vinyl-2-norbornene and the like, and so on can be used.

And, the method of polymerization is not particularly limitative and, for example, any desired polymerization methods such as the slurry polymerization method, high-temperature solution polymerization method, gas-phase polymerization method, bulk polymerization method and the like can be adopted. As the solvent for polymerization, inert solvents such as aliphatic hydrocarbons, alicyclic hydrocarbons, aromatic hydrocarbons and the like can be used, of which aliphatic hydrocarbons such as hexane, heptane and the like are preferable.

As to the polymerization catalyst, it is desirable in the case of the use of the contacting product obtained by the above described method (2) to use in such a range of from $10^{-8}$ to $10^{-3}$ mole/liter or, preferably, from $10^{-7}$ to $10^{-4}$ mole/liter calculated as Ti atoms.

Further, the polymerization temperature is not particularly limitative but it is selected in the range, usually, from 0 to 350 °C or, preferably, from 20 to 250 °C. On the other hand, the polymerization pressure is also not particularly limitative but it is selected in the range, usually, from 0 to 150 $kg/cm^2G$ or, preferably, from 0 to 100 $kg/cm^2G$.

Further, control of the molecular weight can be performed either by increasing the polymerization temperature or by the addition of hydrogen, an alkyl aluminum, an alkyl zinc and the like in the course of the polymerization.

In the following, the present invention is described in more detail by way of examples but the present invention is never limited by these examples in any way.

Example 1.

(1) Preparation of dimethyl anilinium tetra(pentafluorophenyl) borate

Pentafluorophenyl lithium prepared from 152 mmoles of bromo pentafluoro benzene and 152 mmoles of butyl lithium was reacted in hexane with 45 mmoles of boron trichloride to give tri(pentafluorophenyl) boron in the form of a white solid.

A reaction of 41 mmoles of the thus obtained tri(pentafluorophenyl) boron and 41 mmoles of pentafluorophenyl lithium was conducted and lithium tetra(pentafluorophenyl) boron was isolated in the form of a white solid.

In the next place, 16 mmoles of lithium tetra(pentafluorophenyl) boron and 16 mmoles of dimethyl aniline hydrochloride were reacted in water to give 11.4 mmoles of dimethyl anilinium tetra-(pentafluorophenyl) boron in the form of a white solid.

Identification was undertaken by $^1H$-NMR and $^{13}C$-NMR that the product was the desired product.

(2) Copolymerization of ethylene and 1-octene

A dried polymerization reactor of 1 liter equipped with a stirrer was flashed with dry nitrogen followed by introduction of 340 ml of dried n-hexane and 60 ml of 1-octene and the temperature was increased up to

60 °C.

Into the polymerization reactor were introduced 1.0 ml of a hexane solution of triisobutyl aluminum (1.0 mole/liter), 3.0 ml of a dispersion of dimethyl anilinium tetra(pentafluorophenyl) boron in hexane (2.0 mmoles/liter) and 2.0 ml of a hexane solution of tetra(n-butoxy) titanium (0.1 mole/liter) followed by immediate temperature elevation up to 80 °C. In the next place, ethylene gas was introduced and polymerization was conducted for 60 minutes at 80 °C while maintaining the total pressure at 8 kg/cm$^2$G. After the end of the polymerization time, the pressure was immediately released and methyl alcohol was added to the polymerization reactor to terminate the polymerization. The content of the polymerization reactor was put into a large volume of a mixture of ethyl alcohol and hydrochloric acid to effect deashing. The polymer filtered and fractionated was dried under reduced pressure at 80 °C for 4 hours to give 0.32 g of a copolymer of ethylene and 1-octene. The [$\eta$] was 8.0.

Example 2.

Practice was undertaken in the same manner as in Example 1 excepting introduction of 28 mmoles of toluene in the course of the copolymerization of ethylene and 1-octene. 0.43 g of a copolymer of ethylene and 1-octene having a [$\eta$] = 9.4 was obtained.

Example 3.

(1) Contacting reaction of the three ingredients

A Schlenk bottle of 100 ml was charged with 46.5 ml of hexane and 1.0 ml of a hexane solution of triisobutyl aluminum (1.0 mole/liter) as the ingredient (C). In the next place, 1.0 ml of a hexane solution of tetra(n-butoxy) titanium (0.1 mole/liter) as the ingredient (A) was added under agitation and agitation was conducted for 10 minutes. Further, 1.5 ml of a dispersion of dimethyl anilinium tetra(pentafluorophenyl) borate in hexane (1.0 mole/liter) as the ingredient (B) were added and agitation was further continued for 60 minutes to conduct the contacting reaction. The thus obtained contacting reaction product was subjected to aging for 24 hours at room temperature in a dark place.

(2) Copolymerization of ethylene and 1-octene

A dried polymerization reactor of 1 liter equipped with a stirrer was flashed with dry nitrogen followed by introduction of 340 ml of dried n-hexane, 60 ml of 1-octene and 1.0 mmole of triisobutyl aluminum and the temperature was increased up to 60 °C.

A polymerization reactor was charged with 2.0 ml of the contacting reaction product of the above described three ingredients (4 µmoles-Ti) and the temperature was immediately increased up to 80 °C. In the next place, ethylene gas was introduced and polymerization was conducted for 10 minutes at 80 °C while maintaining the total pressure at 8 kg/cm$^2$G. After the end of the polymerization time, the pressure was immediately released and methyl alcohol was added to the polymerization reactor to terminate the polymerization. The content of the polymerization reactor was put into a large volume of a mixture of ethyl alcohol and hydrochloric acid to effect deashing. The polymer filtered and fractionated was dried under reduced pressure at 80 °C for 4 hours to give 2.10 g of a copolymer of ethylene and 1-octene. The [$\eta$] was 4.5.

Example 4.

(1) Contacting reaction of the three ingredients

A Schlenk bottle of 100 ml was charged with 46.5 ml of hexane and 1.0 ml of a hexane solution of triisobutyl aluminum (1.0 mole/liter) as the ingredient (C). In the next place, 1.0 ml of a hexane solution of tetra(n-butoxy) titanium (0.1 mole/liter) as the ingredient (A) was added under agitation and agitation was conducted for 10 minutes. Further, 1.5 ml of a toluene solution of dimethyl anilinium tetra(pentafluorophenyl) borate as the ingredient (B) (1.0 mole/liter) were added and agitation was further continued for 60 minutes to conduct the contacting reaction. The thus obtained contacting reaction product was subjected to aging for 48 hours at room temperature in a dark place.

(2) Copolymerization of ethylene and 1-octene

A dried polymerization reactor of 1 liter equipped with a stirrer was flashed with dry nitrogen followed by introduction of 340 ml of dried n-hexane, 60 ml of 1-octene and 1.0 mmole of triisobutyl aluminum and the temperature was increased up to 60 °C.

A polymerization reactor was charged with 2.0 ml of the contacting reaction product of the above described three ingredients (4 μmoles-Ti) and the temperature was immediately increased up to 80 °C. In the next place, ethylene gas was introduced and polymerization was conducted for 10 minutes at 80 °C while maintaining the total pressure at 8 $kg/cm^2G$. After the end of the polymerization time, the pressure was immediately released and methyl alcohol was added to the polymerization reactor to terminate the polymerization. The content of the polymerization reactor was put into a large volume of a mixture of ethyl alcohol and hydrochloric acid to effect deashing. The polymer filtered and fractionated was dried under reduced pressure at 80 °C for 4 hours to give 3.61 g of a copolymer of ethylene and 1-octene. The [$\eta$] was 11.8. The content of the octene units was 6.2% by moles as determined from $^{13}C$-NMR.

Comparative Example 1.

Practice was undertaken in the same manner as in Example 4 except that the dimethyl anilinium tetra-(pentafluorophenyl) borate was not used to obtain only a trace amount of the polymer.

Comparative Example 2.

Practice was undertaken in the same manner as in Example 4 except that no triisobutyl aluminum was used resulting in failure of obtaining a polymer.

Comparative Example 3.

Practice was undertaken in the same manner as in Example 4 excepting for the use of tetra(n-butoxy) zirconium in place of tetra(n-butoxy) titanium to obtain only a trace amount of the polymer.

Example 5.

The amount of the ingredient (C) was varied in the field of the contacting reaction.

(1) Contacting reaction of the three ingredients

A Schlenk bottle of 100 ml was charged with 37.5 ml of hexane and 10 ml of a hexane solution of triisobutyl aluminum (1.0 mole/liter) as the ingredient (C). In the next place, 1.0 ml of a hexane solution of tetra(n-butoxy) titanium (0.1 mole/liter) as the ingredient (A) was added under agitation and agitation was conducted for 10 minutes. Further, 1.5 ml of a toluene solution of dimethyl anilinium tetra(pentafluorophenyl) borate as the ingredient (B) (1.0 mole/liter) were added and agitation was further continued for 60 minutes to conduct the contacting reaction. The thus obtained contacting reaction product was subjected to aging for 24 hours at room temperature in a dark place.

(2) Copolymerization of ethylene and 1-octene

Copolymerization was conducted in the same manner as in Example 4. 3.13 g of a copolymer of ethylene and 1-octene having a [$\eta$] = 11.6 were obtained.

Example 6.

The contacting reaction of the three ingredients was conducted in toluene as the solvent.

(1) Contacting reaction of the three ingredients

A Schlenk bottle of 100 ml was charged with 46.5 ml of toluene and 1.0 ml of a hexane solution of triisobutyl aluminum (1.0 mole/liter) as the ingredient (C). In the next place, 1.0 ml of a hexane solution of tetra(n-butoxy) titanium (0.1 mole/liter) as the ingredient (A) was added under agitation and agitation was

conducted for 10 minutes. Further, 1.5 ml of a toluene solution of dimethyl anilinium tetra(pentafluorophenyl) borate as the ingredient (B) (1.0 mole/liter) were added and agitation was further continued for 60 minutes to conduct the contacting reaction. The thus obtained contacting reaction product was directly used in the polymerization.

(2) Copolymerization of ethylene and 1-octene

Copolymerization was conducted in the same manner as in Example 4 except that the amount of n-hexane was 370 ml and the amount of 1-octene was 30 ml. 3.87 g of a copolymer of ethylene and 1-octene having a [$\eta$] = 14.7 were obtained. The content of the octene units was 2.8% by moles as determined from $^{13}$C-NMR.

Example 7.

Triethyl aluminum was used as the ingredient (C).

(1) Contacting reaction of the three ingredients

A Schlenk bottle of 100 ml was charged with 46.5 ml of hexane and 1.0 ml of a hexane solution of triethyl aluminum (1.0 mole/liter) as the ingredient (C). In the next place, 1.0 ml of a hexane solution of tetra (n-butoxy) titanium (0.1 mole/liter) as the ingredient (A) was added under agitation and agitation was conducted for 10 minutes. Further, 1.5 ml of a toluene solution of dimethyl anilinium tetra-(pentafluorophenyl) borate as the ingredient (B) (1.0 mole/liter) were added and agitation was further continued for 60 minutes to conduct the contacting reaction. The thus obtained contacting reaction product was directly used in the polymerization.

(2) Copolymerization of ethylene and 1-octene

Copolymerization was conducted in the same manner as in Example 4. 1.85 g of a copolymer of ethylene and 1-octene having a [$\eta$] = 8.8 were obtained. The content of the octene units was 5.9% by moles.

Example 8.

Titanium tetrachloride was used as the ingredient (A).

(1) Contacting reaction of the three ingredients

A Schlenk bottle of 100 ml was charged with 46.5 ml of toluene and 1.0 ml of a hexane solution of triisobutyl aluminum (1.0 mole/liter) as the ingredient (C). In the next place, 1.0 ml of a hexane solution of titanium tetrachloride (0.1 mole/liter) as the ingredient (A) was added under agitation and agitation was conducted for 10 minutes. Further, 1.5 ml of a toluene solution of dimethyl anilinium tetra(pentafluorophenyl) borate as the ingredient (B) (1.0 mole/liter) were added and agitation was further continued for 60 minutes to conduct the contacting reaction. The thus obtained contacting reaction product was directly used in the polymerization.

(2) Copolymerization of ethylene and 1-octene

Copolymerization was conducted in the same manner as in Example 4. 0.57 g of a copolymer of ethylene and 1-octene having a [$\eta$] = 23.0 was obtained.

Example 9.

Bis(cyclopentadienyl) dichloro titanium was used as the ingredient (A).

(1) Copolymerization of ethylene and 1-octene

A dried polymerization reactor of 1 liter was flashed with dry nitrogen followed by introduction of 370 ml of dried toluene and 30 ml of 1-octene and the temperature was increased up to 60 °C.

1.0 mmole of triisobutyl aluminum, 6.0 µmoles of the above described dimethyl anilinium tetra-(pentafluorophenyl) borate and 4.0 µmoles of bis(cyclopentadienyl) dichloro titanium were added to the polymerization reactor and the temperature was immediately increased up to 80 °C. In the next place, ethylene gas was introduced and the polymerization was conducted for 15 minutes at 80 °C while maintaining the total pressure at 8 $kg/cm^2G$. The subsequent procedure was the same as in Example 2. 20.6 g of a copolymer of ethylene and 1-octene having a $[\eta]$ = 1.4 were obtained. The content of octene was 1.1% by moles as determined from the $^{13}C$-NMR.

Example 10.

Practice was undertaken in the same manner as in Example 9 excepting for the use of bis-(cyclopentadienyl) dimethoxy titanium in place of bis(cyclopentadienyl) dichloro titanium to obtain 18.1 g of a copolymer of ethylene and 1-octene having a $[\eta]$ = 1.5.

Example 11.

(1) Contacting reaction of the three ingredients

A Schlenk bottle of 100 ml was charged with 46.5 ml of hexane and 1.0 ml of a hexane solution of triisobutyl aluminum (1.0 mole/liter) as the ingredient (C). In the next place, 1.0 ml of a hexane solution of tetra(n-butoxy) titanium (0.1 mole/liter) as the ingredient (A) was added under agitation and agitation was conducted for 10 minutes. Further, 1.5 ml of a dispersion of dimethyl anilinium tetra(pentafluorophenyl) borate in hexane (1.0 mole/liter) as the ingredient (B) were added and agitation was further continued for 60 minutes to conduct the contacting reaction. The thus obtained contacting reaction product was subjected to aging for 24 hours at room temperature in a dark place.

(1) Copolymerization of ethylene and 1-octene

A dried polymerization reactor of 1 liter equipped with a stirrer was flashed with dry nitrogen followed by introduction of 360 ml of dried n-hexane, 40 ml of 1-octene and 1.0 mmole of triisobutyl aluminum and the temperature was increased up to 60 °C.

2.0 ml of the above described contacting reaction product of the three ingredients (4.0 µmoles-Ti) were added to the polymerization reactor and the temperature was immediately increased up to 80 °C. In the next place, ethylene gas was introduced and the polymerization was conducted for 10 minutes at 80 °C while maintaining the total pressure at 8 $kg/cm^2G$. After the end of the polymerization time, the pressure was immediately released and methyl alcohol was put into the polymerization reactor to terminate the polymerization. The content of the polymerization reactor was put into a large volume of a mixture of ethyl alcohol and hydrochloric acid to effect deashing. The polymer filtered and fractionated was dried under reduced pressure for 4 hours at 80 °C. The results are shown in Table 1.

Example 12.

(1) Contacting reaction of the four ingredients

A Schlenk bottle of 100 ml was charged with 45.5 ml of hexane, 1.0 ml of a hexane solution of diphenyl dimethyl silane (1.0 mole/liter) as the ingredient (D) and 1.0 ml of a hexane solution of triisobutyl aluminum (1.0 mole/liter) as the ingredient (C). In the next place, 1.0 ml of a hexane solution of tetra(n-butoxy) titanium (0.1 mole/liter) as the ingredient (A) was added under agitation and agitation was conducted for 10 minutes. Further, 1.5 ml of a dispersion of dimethyl anilinium tetra(pentafluorophenyl) borate in hexane (1.0 mole/liter) as the ingredient (B) were added and agitation was further continued for 60 minutes to conduct the contacting reaction. The thus obtained contacting reaction product was subjected to aging for 24 hours at room temperature in a dark place.

(2) Copolymerization of ethylene and 1-octene

Copolymerization was performed in the same manner as in Example 11. The results are shown in Table 1.

Examples 13 and 14.

Practice was undertaken in the same manner as in Example 12 excepting for the use of the compound indicated in Table 1 as the ingredient (D) in place of diphenyl dimethyl silane. The results are shown in Table 1.

Table 1

| | Ingredient (D) | Yield (g) | Polymerization activity (kg/g-Ti/hr) | [η] | Melting point |
|---|---|---|---|---|---|
| Example 11 | None | 1.54 | 48 | 5.8 | 129 |
| Example 12 | Diphenyl dimethyl silane | 7.63 | 239 | 9.8 | 117 |
| Example 13 | Toluene | 2.55 | 80 | 6.2 | 122 |
| Example 14 | n-Propyl-benzene | 2.51 | 79 | 6.6 | 118 |

Example 15.

Practice was undertaken in the same manner as in Example 11 except that triisobutyl aluminum was not used in the copolymerization of ethylene and 1-octene. 10.26 g of a copolymer of ethylene and 1-octene having a $[\eta] = 23.0$ were obtained.

Industrial Applicability

According to the present invention, olefins can be polymerized with good efficiency at high catalytic activity even without using a large amount of an organometallic compound by using those consisting of a titanium compound, a compound capable of forming an ionic complex by reacting with a transition metal compound, an organoaluminum compound and, optionally, a compound having a π electron or, in particular, a reaction product obtained by bringing the above mentioned three ingredients or four ingredients into contact in advance as a polymerization catalyst and, in particular, a linear low-density polyethylene can be prepared industrially advantageously.

## Claims

**1.** A method for the preparation of a polyolefin characterized, in the preparation of a polyolefin by the polymerization of an olefin in the presence of a catalyst, by the use of, as the catalyst, a catalyst system consisting of (A) a titanium compound, (B) a compound capable of forming an ionic complex by reacting with a transition metal compound, (C) an organoaluminum compound and, optionally, (D) a non-polymerizable compound having a π electron.

**2.** The method described in Claim 1 in which the ingredient (A), ingredient (B), ingredient (C) and, optionally, ingredient (D) are used after being subjected to a contacting reaction in advance.

**3.** The method described in Claim 1 or 2 in which the ingredient (A) is a titanium compound represented by the general formula

$CpTiR^1{}_aR^2{}_bR^3{}_c$,
$Cp_2TiR^1{}_aR^2{}_b$,
$(Cp\text{-}A\text{-}Cp)TiR^1{}_aR^2{}_b$

or

$TiR^1_aR^2_bR^3_cR^4_d$

(in the formula, Cp is a cyclic unsaturated hydrocarbon group, $R^1$, $R^2$, $R^3$ and $R^4$ are each a $\sigma$ -bonding ligand, chelate-forming ligand or Lewis base, A is a crosslink by covalent bonding and a, b, c and d are each a number of 0 or an integer of 1 to 4 with the proviso that the sum of the total thereof and the number of the Cps is equal to 4) or an addition product of this titanium compound with a Lewis base or an unsaturated hydrocarbon.

## INTERNATIONAL SEARCH REPORT

International application No.
PCT/JP93/00727

**A. CLASSIFICATION OF SUBJECT MATTER**

Int. $Cl^5$ C08F10/00, 4/642

According to International Patent Classification (IPC) or to both national classification and IPC

**B. FIELDS SEARCHED**

Minimum documentation searched (classification system followed by classification symbols)

Int. $Cl^5$ C08F10/00-10/14, 110/00-110/14, 210/00-210/18, 4/64-4/658

Documentation searched other than minimum documentation to the extent that such documents are included in the fields searched

Electronic data base consulted during the international search (name of data base and, where practicable, search terms used)

WPI, WPI/L, CAS ONLINE

**C. DOCUMENTS CONSIDERED TO BE RELEVANT**

| Category* | Citation of document, with indication, where appropriate, of the relevant passages | Relevant to claim No. |
|---|---|---|
| P | JP, A, 5-43618 (Idemitsu Kosan Co., Ltd.), February 23, 1993 (23. 02. 93), Lines 7 to 24, column 4 & EP, A, 513380 & WO, A1, 92/9640 | 1-3 |
| Y | JP, A, 1-502036 (Exxon Chemical Patents, Inc.), July 13, 1989 (13. 07. 89), Claim & EP, A, 277004 & WO, A1, 88/5793 & AU, A, 8812452 & NO, A, 8804210 & DK, A, 8805488 & PT, A, 86672 & FI, A, 8804487 & HU, A, T51305 | 1-3 |
| Y | JP, A, 3-179006 (Fina Technology Inc.), August 5, 1991 (05. 08. 91), Lines 6 to 15, lower right column, page 7 & EP, A, 427696 & CA, A, 2027144 | 1-3 |

[X] Further documents are listed in the continuation of Box C. [ ] See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| August 5, 1993 (05. 08. 93) | August 24, 1993 (24. 08. 93) |
| Name and mailing address of the ISA/ Japanese Patent Office | Authorized officer |
| Facsimile No. | Telephone No. |